(19) Europäisches Patentamt
European Patent Office
Office européen des brevets

(11) Veröffentlichungsnummer: **0 272 542 B1**

(12) **EUROPÄISCHE PATENTSCHRIFT**

(45) Veröffentlichungstag der Patentschrift: **10.03.93**

(51) Int. Cl.$^5$: **A01N 47/36**, A01N 47/32, A01N 47/30

(21) Anmeldenummer: **87118198.8**

(22) Anmeldetag: **09.12.87**

Die Akte enthält technische Angaben, die nach dem Eingang der Anmeldung eingereicht wurden und die nicht in dieser Patentschrift enthalten sind.

# (54) Mittel zur Abszission von Pflanzenteilen.

(30) Priorität: **18.12.86 DE 3643246**

(43) Veröffentlichungstag der Anmeldung:
**29.06.88 Patentblatt 88/26**

(45) Bekanntmachung des Hinweises auf die Patenterteilung:
**10.03.93 Patentblatt 93/10**

(84) Benannte Vertragsstaaten:
**DE ES GR**

(56) Entgegenhaltungen:
**CH-A- 554 886**
**GB-A- 1 543 183**

(73) Patentinhaber: **BASF Aktiengesellschaft**
**Carl-Bosch-Strasse 38**
**W-6700 Ludwigshafen(DE)**

(72) Erfinder: **Schulz, Guenter, Dr.**
**Carl-Bosch-Strasse 96**
**W-6700 Ludwigshafen(DE)**
Erfinder: **Sauter, Hubert, Dr.**
**Neckarpromenade 20**
**W-6800 Mannheim 1(DE)**
Erfinder: **Grossmann, Klaus, Dr.**
**Buschstrasse 34**
**W-6708 Neuhofen(DE)**
Erfinder: **Kleuser, Dieter, Dr.**
**Pierstrasse 4**
**W-6710 Frankenthal(DE)**

**EP 0 272 542 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Mittel zur Abszission von Pflanzenteilen, die mindestens ein Harnstoffderivat der allgemeinen Formel I

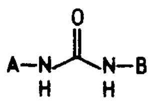 (I),

in der die Substituenten und der Index folgende Bedeutung haben:

A

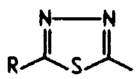 , 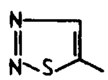 , 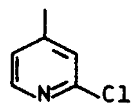 oder 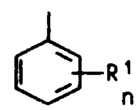 ,

B Cyclopentyl, Cyclohexyl, Phenyl oder mit ein, zwei oder drei Chlor-, Brom- oder Fluoratomen substituiertes Phenyl, wobei

R Wasserstoff oder Methyl,

$R^1$ Fluor, Chlor oder Brom und

n die ganzen Zahlen 1, 2 oder 3 bedeuten,

und entweder

a) ein oxyethyliertes Talgfettamin der allgemeinen Formel II

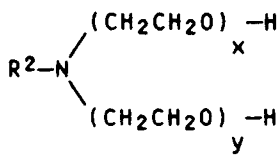 (II),

in der der Substituent und die Indices folgende Bedeutung haben:

$R^2$ $C_{16}$-$C_{18}$-n- oder iso-Alkyl und

x, y zusammen eine ganze Zahl zwischen 8 und 20, oder

b) einen Fettalkohol der allgemeinen Formel III

$R^3$-$CH_2O$-$(CH_2CH_2O)_w$-$(CH(CH_3)CH_2O)_z$-H (III),

in der der Substituent und die Indices folgende Bedeutung haben:

$R^3$ $C_{10}$-$C_{18}$-n-Alkyl,

w die ganzen Zahlen von 3 bis 7 und

z die ganzen Zahlen von 0 bis 7,

enthalten,

wobei das Gewichtsverhältnis von Harnstoffderivat I und oxethyliertem Talgfettamin II bzw. Fettalkohol III zwischen 0,01:1 und 10:1 liegt.

Aus DE-A-25 06 690 und DE-A-26 19 861 beispielsweise sind die Verbindungen I als Wachstumsregulatoren und zur Entblätterung von Pflanzen bekannt. Die aus ihnen hergestellten, bekannten Mittel enthalten keine oxethylierten Talgfettamine II oder Fettalkohole III. Die bekannten Mittel lassen in ihrer Wirkung insbesondere bei niedrigen Temperaturen zu wünschen übrig.

Ferner ist bekannt, daß polyethoxylierte Talgfettamine bei Herbiziden die Wirksamkeit steigern können, so daß zur Erzielung der gleichen herbiziden Wirkung geringere Aufwandmengen ausreichen. Die Hersteller solcher Tenside weisen jedoch immer wieder darauf hin, daß solche Ergebnisse nicht verallgemeinerbar sind. In wenigen Fällen sind Wirkungssteigerungen durch Penetrationsverbesserer bei Fungiziden bekannt geworden. Bei Insektiziden werden Wirkungssteigerungen postuliert. Bei Bioregulatoren, insbesondere bei

Abszissionsmitteln, ist dagegen nichts dergleichen bekannt (vgl. z.B. Agrochem. Bull. A 85-1; Akzo-Chemie). Bioregulatoren nehmen darüber hinaus unter den Pflanzenschutzmitteln eine Sonderstellung ein, da die zugrundeliegenden Wirkstoffe nicht auf die Abtötung eines Organismus zielen (wie z.B. bei Herbiziden, Fungiziden, Insektiziden), sondern den Lebensverlauf einer Pflanze beeinflussen. Man kann deshalb nicht davon ausgehen, daß die Erkenntnisse bei Herbiziden, Fungiziden und Insektiziden auf Bioregulatoren übertragbar sind.

Der Erfindung lag daher die Aufgabe zugrunde, auf der Basis von Harnstoffderivaten I neue Mittel zur Entblätterung von Pflanzen mit verbesserter Wirkung auch bei niedrigen Temperaturen bereitzustellen.

Demgemäß wurde gefunden, daß die erfindungsgemäßen Zusätze in Form von oxethylierten Talgfettaminen II bzw. Fettalkoholen III die Abszission von Pflanzenteilen durch Harnstoffderivate I auch bei niedrigen Temperaturen verbessern.

Im einzelnen haben die Substituenten in Formel I und die Substituenten und der Index im Substituenten A folgende Bedeutungen:

A

- 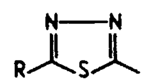 ,

- 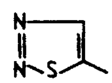 ,

- 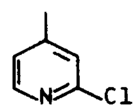 ,

- 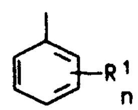 ,

B - Cyclopentyl,
- Cyclohexyl,
- Phenyl,
- mit ein, zwei oder drei Chloratomen substituiertes Phenyl, wie 2-Chlorphenyl, 4-Chlorphenyl, 2,4-Dichlorphenyl, 2,6-Dichlorphenyl und 2,4,6-Trichlorphenyl,
- mit ein, zwei oder drei Bromatomen substituiertes Phenyl, wie 2-Bromphenyl, 4-Bromphenyl, 2,4-Dibromphenyl, 2,6-Dibromphenyl und 2,4,6-Tribromphenyl,
- mit ein, zwei oder drei Fluoratomen substituiertes Phenyl, wie 2-Fluorphenyl, 4-Fluorphenyl, 2,4-Difluorphenyl, 2,6-Difluorphenyl und 2,4,6-Trifluorphenyl,

R - Wasserstoff,
- Methyl,

$R^1$ - Fluor, Chlor oder Brom und

n - die ganzen Zahlen 1, 2 oder 3.

Im einzelnen haben der Substituent und die Indices in Formel II folgende Bedeutungen:

$R^2$ - $C_{16}$-$C_{18}$-n- oder iso-Alkyl, wie n-Hexadecyl, iso-Hexadecyl, n-Heptadecyl, iso-Heptadecyl, n-Octadecyl und iso-Octadecyl,

x,y - zusammen eine ganze Zahl zwischen 8 und 20, wie acht, neun, zehn, elf, zwölf, dreizehn, vierzehn, fünfzehn, sechzehn, siebzehn, achtzehn, neunzehn oder zwanzig.

Im einzelnen haben der Substituent und die Indices in Formel III folgende Bedeutungen:

$R^3$ - $C_{10}$-$C_{18}$-n-Alkyl, wie n-Decyl, n-Undecyl, n-Dodecyl, n-Tridecyl, n-Tetradecyl, n-Pentadecyl, n-Hexadecyl, n-Heptadecyl oder n-Octadecyl,

w - die ganzen Zahlen von 3 bis 7, wie drei, vier, fünf, sechs und sieben,

z - die ganzen Zahlen von 0 bis 7, wie Null, eins, zwei, drei, vier, fünf, sechs oder sieben.

Die Abszission von Pflanzenteilen wie Blättern, Blüten und Früchten vom Pflanzenkörper ist ein normalerweise durch endogene Stoffe der Pflanze gesteuerter Vorgang. Veränderungen in speziellen

Gewebebereichen, die sich an der Basis von Blättern, Blüten oder Fruchtstielen befinden, werden durch diese Pflanzeninhaltsstoffe induziert. Die Zellen der Trennzone werden weich, mechanische Kräfte, z. B. Eigengewicht oder Wind, trennen die Pflanzenteile vom Pflanzenkörper ab (vgl. z.B. Dörffling; Das Hormonsystem der Pflanzen, Georg Thieme Verlag 1982).

Die Induktion der Abszission von Pflanzenteilen kann auch durch exogen zugeführte Wirkstoffe erfolgen. Die so gezielt herbeigeführte Abszission besitzt wirtschaftliches Interesse: Sie trägt zur Ernteerleichterung z. B. beim Ernten von Baumwolle, aber auch bei Citrusfrüchten, Oliven und Kern- und Steinobst, bei.

Die Ausbringung der Wirkstoffe erfolgt üblicherweise formuliert, d.h. unter Zusatz von Hilfsmitteln wie z.B. oberflächenaktiven Stoffen. Die den Wirkstoff und Formulierungshilfsstoffe enthaltenden Mittel sind dann für den Anwender in der üblichen Weise handhabbar.

Die Formulierungen enthalten im allgemeinen zwischen 0,1 und 95 Gew.% Wirkstoff, vorzugsweise zwischen 0,5 und 90 Gew.%.

Die Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low-Volume"- und "Ultra-low-Volume"-Verfahren ist ebenso möglich wie ihre Applikation in Form von sogenannten Mikrogranulaten. Infolge der hohen Pflanzenverträglichkeit kann die Aufwandmenge an Wirkstoff stark variieren. Für die Blattbehandlung sind im allgemeinen Gaben von 0,01 bis 5 kg/ha ausreichend.

Die Mittel können durch Mischen mit weiteren üblichen Formulierungshilfsmitteln als Fertigformulierung zur Anwendung kommen. Ebenso möglich ist die Anwendung in Form eines Adjuvants, d. h. der Einsatz im Tankmixverfahren. Hierzu ist es u. U. notwendig das Adjuvants in Form einer Prämix vorzubereiten, um eine homogene physikalische Verteilung in der Spitzbrühe zu gewährleisten.

In den folgenden Beispielen wurden die jeweils angegebenen Wirkstoffe mit entsprechenden Zusätzen untersucht.

Der Wirkstoff N-Phenyl-N'-(1,2,3-thiadiazol-5-yl)-harnstoff wurde in Form seines fertig formulierten Handelsproduktes (derzeit erhältlich unter dem Handelsnamen DROPP®) verwendet. Die Angaben zur mengenbezogenen Wirkung beziehen sich in diesem Fall auf den Wirkstoffanteil. Die übrigen Wirkstoffe wurden in vergleichbare Formulierung gebracht und dann mit den erfindungsgemäßen bzw. nicht erfindungsgemäßen Zusätzen versetzt.

Erfindungsgemäß sind die nachstehenden Zusätze:
Oxethylierte Talgfettamine der Formel II:

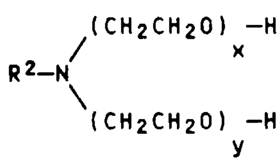

II

| Bezeichnet in den Beispielen mit | Handelsbezeichnung | $R^2$ | x + y |
|---|---|---|---|
| A | Genamin® T 100 | $C_{16}$-$C_{18}$ | 10 |
| B | Ethomeene® T 25 | $C_{16}$-$C_{18}$ | 15 |

Fettalkoholalkoxylate der Formel III:

$R^3$-$CH_2O$-$(CH_2CH_2O)_w$-$(CH(CH_3)CH_2O)_z$-H

| Bezeichnet in den Beispielen | Handelsbezeichnung | $R^3$ | w | z |
|---|---|---|---|---|
| C | Plurafac® LF 700 | $C_{18}$ | 5 | 7 |
| D | Plurafac® AO 3 | $C_{13}$-$C_{15}$ | 3 | 0 |
| E | Plurafac® ON 70 | $C_{10}$ | 7 | 0 |

Nicht erfindungsgemäß sind folgende Hilfsmittel:

AA: Nonylphenol enthaltendes Hilfsmittel, erhältlich als Nekanil® 904
BB: EO/PO-Blockcopolymerisat, erhältlich als Pluriol® PE 6200
CC: Tristyrylphenol-Ethoxylat, erhältlich als HOE S 3474
DD: Ethoxyliertes Cocosfettamin der Formel II, jedoch mit $x + y = 2$; $R^2 = C_{12}$-$C_{14}$, erhältlich als Ethomeene® C12
EE: Fettalkoholalkoxylat der Formel III, jedoch mit $w = 12$; $z = 6$; $R^3 = C_{13}$-$C_{15}$; erhältlich als Plurafac® LF 600
FF: Aceton

Beispiel 1

Wirkstoff N-Phenyl-N'-(1,2,3-thiadiazol-5-yl)-harnstoff

Junge Baumwollpflanzen (Sorte: Delta Pine, Entwicklungsstadium: 5 - 6 entwickelte Laubblätter) wurden unter Gewächshausbedingungen angezogen (Tag/Nachttemperatur 24/13 °C, relat. Luftfeuchte 50 - 70 %) und tropfnaß mit wässrigen Aufbereitungen der angegebenen Mittel blattbehandelt. Fünf Tage nach Applikation der Mittel wurde der Grad der Entblätterung (unbehandelte Kontrolle 0 %) ermittelt. Die Mittel wurden hergestellt aus dem Handelsprodukt und 0,5 Gew.%, bezogen auf die Spritzbrühe, der in der Tabelle angegebenen Hilfsmittel. Die Aufwandmenge an Wirkstoff war bei jedem Experiment gleich und betrug umgerechnet 1 kg/ha, die umgerechnete Wassermenge betrug 1 000 l/ha, d.h. die Konzentration der Spritzbrühe an Wirkstoff war 0,1 %. Bei den unbehandelten Kontrollpflanzen trat kein Blattfall auf.

Versuchsergebnis:

| | Art des Hilfsmittels | % Entblätterung nach 5 Tagen | nach 7 Tagen |
|---|---|---|---|
| Bekanntes Mittel allein | - | 25 | 50 |
| | A | 50 | 79 |
| | B | 67 | 85 |
| | C | 76 | 81 |
| | D | 59 | 80 |
| | E | 60 | 92 |

Beispiel 2

Wirkstoff N-Phenyl-N'-(1,2,3-thiadiazol-5-yl)-harnstoff

Junge Baumwollpflanzen (Sorte Delta Pine, Entwicklungsstadium 5 bis 6 entwickelte Laubblätter) wurden unter Gewächshausbedingungen angezogen (Tag/Nachtemperatur 24/15 °C) und tropfnaß mit wäßrigen Aufbereitungen der in der Tabelle angegebenen Mittel blattbehandelt. Fünf Tage nach Applikation der Mittel wurde der Grad der Entblätterung in Prozent zur unbehandelten Kontrolle ermittelt. Die Mittel wurden

hergestellt aus dem Handelsprodukt DROPP® und Zusätzen (0,5 Gew.%, bezogen auf die Spritzbrühe) der in der Tabelle angegebenen Hilfsmittel. Die Aufwandmenge an Wirkstoff war bei jedem Experiment gleich und betrug umgerechnet 0,5 kg/ha; die umgerechnete Wassermenge betrug 1 000 l/ha entsprechend einer Wirkstoffkonzentration von 0,5 g/l (0,05 %). Bei den unbehandelten Kontrollpflanzen trat kein Blattfall auf.

| Art des Hilfsmittels | % Entblätterung nach 7 Tagen |
|---|---|
| Bekanntes Mittel allein | 25 |
| A | 90 |
| Vergleich DD | 47 |
| C | 84 |
| Vergleich EE | 44 |

Beispiel 3

Wirkstoff N-Cyclopentyl-N'-(1,2,3-thiadiazol-5-yl)-harnstoff

Die Versuchsdurchführung ist unter Beispiel 1 beschrieben. Die Mittel sind durch Zusatz von jeweils 50 g Wirkstoff zu 1 Liter Hilfsmittel hergestellt worden. In der Spritzbrühe beträgt die Hilfsmittelkonzentration 0,5 Gew.%. Zum Vergleich sind übliche Formulierungshilfsmittel mit in die Tabelle aufgenommen. Die Aufwandmenge an Wirkstoff betrug jeweils 1 kg/ha (0.1 %). Die unbehandelten Pflanzen zeigten im Versuchszeitraum keinen Blattfall. Der Grad der Entblätterung wurde in % zur unbehandelten Kontrolle ermittelt.

| Art des Hilfsmittels | % Entblätterung nach 5 Tagen |
|---|---|
| A | 47 |
| B | 93 |
| C | 61 |
| D | 53 |
| Vergleich FF | 0 |
| Vergleich AA | 10 |
| Vergleich BB | 0 |
| Vergleich CC | 0 |

Die Experimente zeigen, daß bei dem Wirkstofftyp der Formel I durch den erfindungsgemäßen Zusatz eine deutliche Steigerung der Wirksamkeit und Wirksicherheit erreicht wird. Es ist überraschend, daß dieser Effekt nur bei den speziellen Tensiden der Formel II und III deutlich auftritt.

Beispiel 4

Wirkstoff N-Phenyl-N'-(1,3,4-thiadiazol-2-yl)-harnstoff

Junge Baumwollpflanzen wurden wie in Beispiel 1 unter Gewächshausbedingungen (Tag/Nachttemperatur 25/18 °C) angezogen und tropfnaß mit wässrigen Aufbereitungen der in der Tabelle angegebenen Mittel behandelt. Fünf Tage nach Applikation der Mittel wurde der Grad der Entblätterung in Prozent zur unbehandelten Kontrolle ermittelt. Die Mittel wurden hergestellt aus dem Wirkstoff und erfindungsgemäßen Hilfsmitteln wie im Beispiel 3 beschrieben. Die Menge an Wirkstoff war bei jedem

Experiment gleich und betrug umgerechnet 2 kg/ha (0,2 %). Die unbehandelten Pflanzen zeigten im Versuchszeitraum keinen Blattfall.

| Art des Hilfsmittels | % Entblätterung nach 5 Tagen |
|---|---|
| A | 69 |
| B | 77 |
| C | 61 |
| D | 75 |
| Vergleich: FF | 0 |

Beispiel 5

Wirkstoff N-Phenyl-N'-(2-chlorpyrid-4-yl)-harnstoff

Junge Baumwollpflanzen wurden wie in Beispiel 1 unter Gewächshausbedingungen (Tag/Nachtemperatur 25/15 °C) angezogen und tropfnaß mit wäßrigen Aufbereitungen der in der Tabelle angegebenen Mittel blattbehandelt. 5 und 8 Tage nach Applikation der Mittel wurde der Grad der Entblätterung in Prozent zur unbehandelten Kontrolle ermittelt. Die Mittel wurden hergestellt aus der oben angegebenen Aktivsubstanz und Hilfsmitteln nach Anspruch 1 oder 2 wie in Beispiel D beschrieben. Die Aufwandmenge an Wirkstoff war bei jedem Experiment gleich und betrug umgerechnet 1 kg/ha (0,1 %ige Spritzbrühe). Die unbehandelten Pflanzen zeigten im Versuchszeitraum keinen Blattfall.

| Nr. oder Name des Hilfsmittels | % Entblätterung nach 5 Tagen | nach 8 Tagen |
|---|---|---|
| A | 49 | 62 |
| B | 62 | 82 |
| C | 70 | 80 |
| D | 64 | 69 |
| Vergleich: FF | 16 | 35 |

## Patentansprüche

**1.** Mittel zur Abszission von Pflanzenteilen, die mindestens ein Harnstoff-Derivat der Formel I

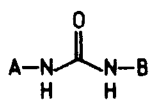

(I),

in der die Substituenten und der Index folgende Bedeutung haben:
A

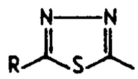 , 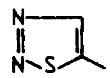 , 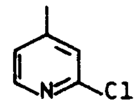 oder 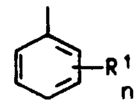

B Cyclopentyl, Cyclohexyl, Phenyl oder mit ein, zwei oder drei Chlor-, Brom- oder Fluoratomen substituiertes Phenyl, wobei

R Wasserstoff oder Methyl,

$R^1$ Fluor, Chlor oder Brom und

n die ganzen Zahlen 1, 2 oder 3 bedeuten,

und entweder

a) ein oxyethyliertes Talgfettamin der allgemeinen Formel II

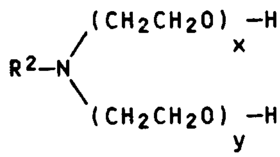 (II),

in der der Substituent und die Indices folgende Bedeutung haben:

$R^2$ $C_{16}$-$C_{18}$-n- oder iso-Alkyl und

x, y zusammen eine ganze Zahl zwischen 8 und 20 oder

b) einen Fettalkohol der allgemeinen Formel III

$R^3$-$CH_2O$-$(CH_2CH_2O)_w$-$(CH(CH_3)CH_2O)_z$-H III,

in der der Substituent und die Indices folgende Bedeutung haben:

$R^3$ $C_{10}$-$C_{18}$-n-Alkyl,

w die ganzen Zahlen von 3 bis 7 und

z die ganzen Zahlen von 0 bis 7,

enthalten, wobei das Gewichtsverhältnis von Harnstoffderivat I und oxethyliertem Talgfettamin II bzw. Fettalkohol III zwischen 0,01:1 und 10:1 liegt.

**2.** Mittel zur Abszission von Pflanzenteilen nach Anspruch 1, in der die Substituenten in Formel I

A

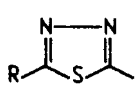 , 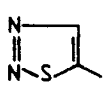 oder 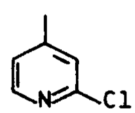 ,

B Cyclopentyl oder Phenyl und

R Wasserstoff,

die Indices in Formel II

x, y zusammen die ganzen Zahlen 10 oder 15 und

der Substituent und die Indices in Formel III

$R^3$ $C_{10}$-, $C_{13}$- bis $C_{15}$- oder $C_{18}$-n-Alkyl,

w die ganzen Zahlen 3, 5 oder 7 und

z 0 oder die ganze Zahl 7 bedeuten.

**3.** Verfahren zur Abszission von Pflanzenteilen, dadurch gekennzeichnet, daß man die Mittel gemäß Anspruch 1 durch Blattspritzung den Pflanzen zuführt.

**4.** Verfahren zur Abszission von Pflanzenteilen, dadurch gekennzeichnet, daß man bei dur Blattbehandlung 0,01 bis 5 kg des mittels gemäß Anspruch 1 pro Hektar verwendet.

5. Verfahren zur Abszission von Pflanzenteilen mit Mitteln gemäß Anspruch 1 in Baumwolle als Kulturpflanze.

## Claims

1. An agent for the abscission of parts of plants, which contains one or more urea derivatives of the formula I

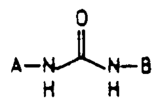

(I)

where A is

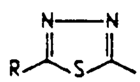,

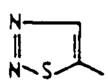,

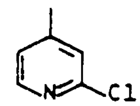 or 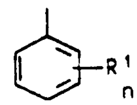

B is cyclopentyl, cyclohexyl or phenyl which is unsubstituted or substituted by one, two or three chlorine, bromine or fluorine atoms, R is hydrogen or methyl, $R^1$ is fluorine, chlorine or bromine and n is the integer 1, 2 or 3,
and either
a) an oxyethylated tallow fatty amine of the formula II

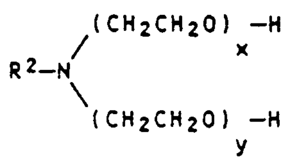

(II)

where $R^2$ is $C_{16}$-$C_{18}$-n-alkyl or isoalkyl and x and y together are an integer from 8 to 20,
or
b) a fatty alcohol of the formula III

$R^3$-$CH_2O$-$(CH_2CH_2O)_w$-$(CH(CH_3)CH_2O)_z$-H    III

where $R^3$ is $C_{10}$-$C_{18}$-n-alkyl, w is an integer from 3 to 7 and z is an integer from 0 to 7,
the weight ratio of urea derivative I to oxyethylated tallow fatty amine II or fatty alcohol III being from 0.01:1 to 10:1.

2. An agent for the abscission of parts of plants as claimed in claim 1, wherein, in formula I,
A is

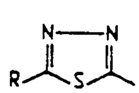,

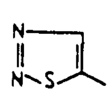

or 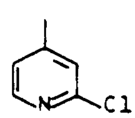

B is cyclopentyl or phenyl and R is hydrogen, in formula II, x and y together are the integer 10 or 15, and in formula III, $R^3$ is $C_{10}$-, $C_{13}$- to $C_{15}$- or $C_{18}$-n-alkyl, w is the integer 3, 5 or 7 and z is 0 or the integer 7.

3. A method for the abscission of parts of plants, wherein an agent is claimed in claim 1 is supplied to the plants by spraying the foliage.

4. A method for the abscission of parts of plants, wherein, in treatment of the foliage, from 0.01 to 5 kg of the agent as claimed in claim 1 is used per hectare.

5. A method for the abscission of parts of plants using an agent as claimed in claim 1 in cotton as the crop.

## Revendications

1. Agent d'abscission de parties de plantes, qui contiennent au moins un dérivé de l'urée de la formule I

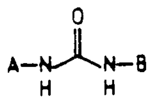 (I),

dans laquelle les substituants et l'indice ont les significations suivantes :

A

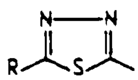 , 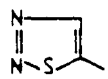 , 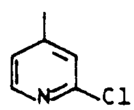 ou 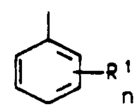

B cyclopentyle, cyclohexyle, phényle ou phényle substitué avec 1, 2 ou 3 atomes de chlore, de brome ou de fluor, où

R est l'hydrogène ou le radical méthyle,

$R^1$ est le fluor, le chlore ou le brome et

n est égal à 1, 2 ou 3

et, soit,

a) une amine grasse de suif oxéthylée de la formule générale II

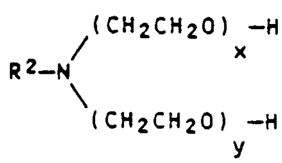 (II),

dans laquelle le substituant et les indices ont les significations suivantes :

$R^2$ isoalkyle en $C_{16}$-$C_{18}$ ou n-alkyle en $C_{16}$-$C_{18}$ et

x, y représentent ensemble un nombre entier dont la valeur varie de 8 à 20,

soit

b) un alcool gras de la formule générale III

$R_3$-$CH_2O$-$(CH_2CH_2O)_w(CH(CH_3)CH_2O)_z$-H (III),

dans laquelle le substituant et les indices ont les significations suivantes :

$R^3$ n-alkyle en $C_{10}$-$C_{18}$,

w représente un nombre entier de 3 à 7 et

z représente un nombre entier de 0 à 7,

où le rapport pondéral du dérivé de l'urée I et de l'amine grasse de suif oxéthylée II ou l'alcool gras III varie de 0,01:1 à 10:1.

**2.** Agents d'abscission de parties de plantes selon la revendication 1, dans lesquels les substituants dans la formule I représentent :

A

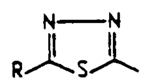 , 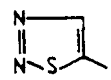 ou 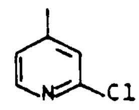

B cyclopentyle ou phényle et

R un atome d'hydrogène,

les indices dans la formule II

x, y représentent ensemble les nombres 10 ou 15 et

le substituant et les indices dans la formule III représentent

$R^3$ n-alkyle en $C_{10}$, $C_{13}$ à $C_{15}$ ou $C_{18}$,

w est égal à 3, 5 ou 7 et

z est égal à 0 ou à 7.

**3.** Procédé d'abscission de parties de plantes, caractérisé en ce que l'on fournit les agents selon la revendication 1 aux plantes par pulvérisation sur les feuilles.

**4.** Procédé d'abscission de parties de plantes, caractérisé en ce que l'on utilise, lors du traitement des feuilles, de 0,01 à 5 kg de l'agent selon la revendication 1 par hectare.

**5.** Procédé d'abscission de parties de plantes à l'aide d'agents selon la revendication 1 dans le coton à titre de plante de culture.